# EUROPEAN PATENT SPECIFICATION

(11) **EP 3 810 453 B1**
(45) Date of publication and mention of the grant of the patent: **18.10.2023**
(21) Application number: 19729555.3
(22) Date of filing: 13.06.2019
(51) Int. Cl.: B60L 1/02, B60L 3/00, B60L 58/12, B60L 58/26, B60L 58/27

(54) **PREDICTIVE REMOTE THERMAL MANAGMENT**
PRÄDIKTIVES FERNWÄRMEMANAGEMENT
GESTION THERMIQUE À DISTANCE PRÉDICTIVE

(30) Priority: 19.06.2018 EP 18178609
(43) Date of publication of application: 28.04.2021
(73) Proprietor: EINRIDE AB, 411 29 Göteborg (SE)
(72) Inventor: FUTTER, Christoph, 113 41 STOCKHOLM (SE)
(74) Representative: AWA Sweden AB
(86) International application number: PCT/EP2019/065513
(87) International publication number: WO 2019/243157

(56) References cited:
- WO-A1-2007/128876
- WO-A1-2015/177210
- WO-A1-2016/202360
- WO-A1-2017/100613
- DE-A1-102018 206 256
- US-A- 5 545 967
- US-A1- 2012 158 229
- US-A1- 2013 030 630
- US-A1- 2014 180 519
- US-A1- 2014 316 630
- US-A1- 2015 100 188
- US-A1- 2015 239 365
- US-A1- 2016 195 587
- US-A1- 2017 129 359
- US-A1- 2017 210 390
- US-A1- 2018 141 552
- US-B1- 9 056 556

## Description

### TECHNICAL FIELD OF THE INVENTION

The present invention relates generally to a predictive management system for electric vehicles, and more particularly to predictive thermal management of battery packs in electrical autonomous and semi-autonomous vehicles.

### BACKGROUND

In many industries (e.g. automotive, transport, industrial trucks, etc.) vehicles are being developed with a goal of reducing or eliminating the consumption of fossil fuels. Thus, no one can have escaped the growing, and nowadays global, trend of replacing the traditional fossil fuel powered car with an electric version. In general, electric vehicles differ from conventional motor vehicle vehicles in that they are selectively driven by one or more battery powered electric machines, while conventional motor vehicles rely exclusively on the internal combustion engine to power the vehicle.

Typically, a high voltage battery pack, at least partly, powers the electric machines and other electrical loads of the electric vehicle. The battery pack includes a plurality of battery cells which must be periodically recharged to replenish the energy necessary to power these loads. During operation, such as charging and discharging, the battery cells generate heat which must be managed. Thus, battery thermal management systems are an important factor in order ensure reliable operation of the electric vehicle, since they are used to manage the detrimental effects of the heat generated by the battery cells.

In more detail, in order to maximize the lifetime and performance of an electric vehicle battery (may also be known as a traction battery), the temperatures of the cells should be carefully monitored and controlled. Temperature control can be achieved by a heat transfer medium that might be in a gaseous, liquid, supercritical state or undergo a phase transition. Heat is added or removed either passively through thermal contact with the environment or actively by a heating device, a refrigeration system, or a combination of both. For monitoring purposes, a battery pack may be equipped with a set of sensors for the measurement of various physical or even chemical properties. The signals delivered by these sensors are processed by an onboard computer, where a control strategy is devised that is then executed by the active components.

A disadvantage of conventional approaches is that it can only act on a given environmental setting, which means that conditions that require changes in cooling or heating power are only detected once they occur. Since thermal processes are slow compared to electrical ones, stabilization of temperatures often must be achieved by excessive cooling or heating power.

Thus, there is a need for new and improved battery thermal management systems in the art.

In US 2013/030630 A1, vehicle operation (e.g., speed, acceleration) may be limited based on various conditions such as a current charge condition of an electrical energy storage devices (e.g., batteries, super- or ultracapacitors), history of such, conditions related to the vehicle (e.g., mileage, weight, size, drag coefficient), a driver or operator of the vehicle (e.g., history with respect to speed, acceleration, mileage) and/or environmental conditions (e.g., ambient temperature, terrain). A controller may control operation of one or more power converters to limit current and/or voltage supplied to a traction electric motor, accordingly.

US 2014/316630 A1 discloses method for controlling the temperature of a vehicle with at least a partial electric drive while the vehicle is connected to a charging station includes setting up a data link for bidirectional communication between the vehicle and charging station. Vehicle-side data is acquired with vehicle-side means for acquiring data, and charging-station-side data is acquired with charging-station-side means for acquiring data. Optimum temperature control parameters of the battery and passenger cell are determined using a logic by processing the acquired vehicle-side and charging-station-side data. The temperature control of the battery and of the passenger compartment of the vehicle is carried out with temperature control means. A motor vehicle and a charging station carry out the method.

In US 2017/129359 A1, a vehicle includes an electric machine arranged to exchange power with a traction battery. The vehicle also includes a thermal conditioning system for influencing a battery temperature and a controller programmed to schedule battery charging. In response to a temperature of the traction battery exceeding a threshold, the controller issues a command to operate the thermal conditioning system prior to a scheduled battery charge to achieve a predetermined battery temperature at a start of battery charging.

US 2018/141552 A1 discloses a method which includes controlling an electrified vehicle based on a route selected for a desired thermal management of a battery. An electrified vehicle includes at least one battery and a control system configured with instructions for automatically controlling the electrified vehicle based on the route selected for the desired thermal management of the battery.

### SUMMARY OF THE INVENTION

It is accordingly an object of the present invention to provide a predictive battery thermal management system for an electrified vehicle comprising a traction battery pack, a corresponding method, and an on-board vehicle control system for monitoring and controlling a temperature of a traction battery pack of an electric vehicle, which alleviate all or at least some of the above-discussed drawbacks of presently known systems.

Moreover, it is an object of the present invention to provide a battery thermal management system and a vehicle control system which are more proactive than presently known systems, and more efficient in terms of data management.

These objects are achieved by means of a predictive battery thermal management system, a corresponding method, and an on-board vehicle control system as defined in the appended claims.

The term exemplary is in the present context to be understood as an example, instance or illustration.

According to a first aspect of the present invention, there is provided a predictive battery thermal management system for an electric vehicle according to claim 1.

Hereby presenting a battery thermal management system which is arranged to accurately predict the thermal management needs of a traction battery and thereby reduce maintenance requirements and prolong the expected lifetime of the electric vehicle, and consequently reduce costs and environmental tear.

The control unit may be realized as a software controlled processor. However, the controller may alternatively be realized wholly or partly in hardware.

The present invention is based on the realization that with the advent of fleets of autonomous electric vehicles that are monitored and controlled from a central entity, a centralized control strategy becomes possible. The thermal management strategy is no longer limited to the vehicles onboard data acquisition- and processing-systems, but can instead be calculated from a dedicated system that might use input data unavailable to the individual vehicles, or simply to optimize computation resources onboard the vehicle.

Moreover, the present inventor realized that by changing the input to the onboard thermal control system from a local sensor set to a remotely managed predictive thermal management system, and thereby make it proactive instead of reactive, the demand of cooling and heating energy can be forecast before the actual thermal load condition occurs. The introduction of a remote thermal management system, that can forecast the cooling or heating demand from a set of input data, could improve temperature stability and thus lifetime and performance of an traction battery pack of the vehicle. At the same tiem it could potentially save energy and costs due to the reduction in advanced sensing equipment, reduced requirements on the onboard computing resources and reduced data traffic. In more detail, by using a central entity computational resources can be better managed and data traffic can be reduced. For example, if several vehicles (connected to the same thermal management system) are taking the same route, the number of calculations can be reduced since parameters are identical or at least very similar for several vehicles. Also, no huge datasets like weather or traffic data have to be transferred to every vehicle, but these datasets are handled by a centralized system.

In accordance with an exemplary embodiment of the present invention, the vehicle diagnostics data further comprises information about cargo weight and cargo distribution of the electric vehicles. By using dynamic parameters such as cargo weight and cargo distribution as input data, the system is made particularly suitable for transport vehicles (e.g. trucks), and capable of making better predictions of the expected temperature of the battery pack throughout the planned route.

Further, in accordance with another exemplary embodiment of the present invention, the weather forecast includes at least one of temperature, solar irradiance, and humidity. Each of these parameters may influences the thermal load on the traction battery of the vehicle. Preferably, the weather forecast includes each one of temperature, solar irradiance, and humidity. Moreover, in accordance with another exemplary embodiment, the vehicle diagnostic data comprises data comprises at least one of a state of charge of each traction battery pack and a state of health of each traction battery pack. By including a state of charge of the battery pack and/or the state of health of the battery pack the thermal management scheme is even further optimized and tailored for each individual vehicle. Instead of just basing the thermal management scheme on the expected load based on a specific route and the current weather, it was realized that the battery status also affects the actual need for cooling and/or heating of the battery pack. Thus, the overall battery life may be further improved.

Even further, in accordance with yet another exemplary embodiment of the present invention, the control unit is further configured to retrieve traffic data associated with the planned route, and wherein the thermal management scheme is further based on the traffic data. By including traffic data, which may be retrieved from any automatic traffic surveillance system, the thermal load predictions can be more precise, wherefore the computed thermal management scheme can be even more accurate. For example, during rush-hour there may be many congestions along the planned route, resulting in an increased degree of idling which can affect the predicted thermal load. A traffic surveillance system is to be construed as a system capable of providing traffic conditions in real time, for example by analysing the GPS-determined locations retrieved from a large number of mobile phone users and calculating the speed of these users along a length of road.

Moreover, in the invention, the battery thermal management system further comprises a data storage unit comprising historical data, the historical data comprising historical thermal management schemes, and wherein the thermal management scheme for the first electric vehicle is further based on the historical data. By using historical data, i.e. previously executed thermal management schemes and the corresponding results (e.g. resulting range, and overall health of the battery pack), the battery thermal management system can be self-improving do some extent and the overall results further improved.

The electric vehicle may be an electric autonomous or semi-autonomous vehicle comprising the traction battery pack.

Said weather forecast may include at least one of expected solar irradiance, and expected humidity.

Said control unit is configured to determine the thermal management scheme for said first electric vehicle based on said vehicle diagnostic data and on an expected thermal load on the traction battery pack of the first electric vehicle throughout the planned route, which expected thermal load is based on said environmental data, such that the traction battery pack of the first electric vehicle is kept within an optimum temperature range.

Further, in accordance with a second aspect of the present invention, there is provided a method for thermal management of a traction battery pack of an electric vehicle according to claim 9.

With this aspect of the invention preferred features and advantages of the invention are readily available as in the previously discussed first aspect of the invention, and vice versa.

The method comprises retrieving historical data comprising historical thermal management schemes, and wherein the step of determining a thermal management scheme for the first electric vehicle based on the vehicle diagnostic data, the environmental data and the historical thermal management data. The historical management data is related to that specific first electric vehicle, and to other electric vehicles. The historical thermal management data comprises previous thermal management schemes applied on/by electric vehicles along the same route. This may be particularly useful in transport applications where similar vehicles repeat the same routes a large number of times.

Yet further, in accordance with another aspect of the present invention, there is provided an on-board vehicle control system according to claim

With this aspect of the invention preferred features and advantages of the invention are readily available as in the previously discussed aspects of the invention, and vice versa.

These and other features of the present invention will in the following be further clarified with reference to the embodiments described hereinafter.

### BRIEF DESCRIPTION OF THE DRAWINGS

These and other aspects of the present invention will now be described in more detail, with reference to the appended drawings showing exemplary embodiments of the present invention, wherein:
Fig. 1 is a schematic block representation of a battery thermal management system in accordance with an embodiment of the present invention;
Fig. 2 is a flow-chart representation of a method for thermal management of a traction battery pack of an electric vehicle, in accordance with an embodiment of the present invention;
Fig. 3 is a vehicle control system for monitoring and controlling a temperature of a traction battery pack of an electric vehicle, in accordance with an embodiment of the present invention.

### DETAILED DESCRIPTION

In the following detailed description, some embodiments of the present invention will be described. However, it is to be understood that features of the different embodiments are exchangeable between the embodiments and may be combined in different ways, unless anything else is specifically indicated. Even though in the following description, numerous details are set forth to provide a more thorough understanding of the present invention, it will be apparent to one skilled in the art that the present invention may be practiced without these details, in accordance with the independent claims. In other instances, well known constructions or functions are not described in detail, so as not to obscure the present invention.

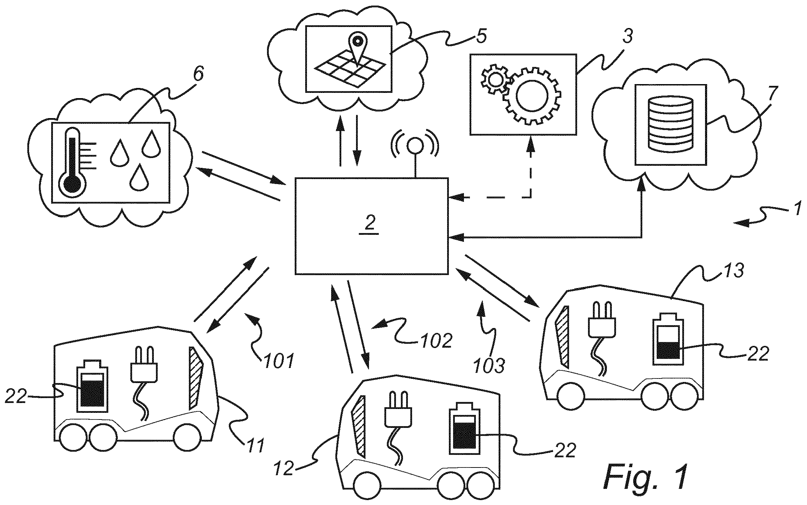

In Fig. 1 a schematic overview of a battery thermal management system 1 for an electric vehicle 11, 12, 13 having a traction battery pack 22 is shown. The battery thermal management system has a communication unit 2 for transmitting and receiving data packets to and from a remote data repository. In other words, the system 1 has a communication unit 2 for transmitting and receiving data packets to a remote stationary server 7 or client 11, 12, 13, for example through an exterior mobile network via one or more antennas associated with the communication unit.

In more detail, the communication unit 2 may for example comprise a router configured to use any available data links such as two or more of e.g. GSM, Satellite, DVB-T, HSPA, EDGE, 1x RTT, EVDO, LTE, WiFi (802.11) and WiMAX; and combine them into on virtual network connection. In particular it is preferred to use data links provided through wireless wide area network (WWAN) communication technologies. However, the communication unit 2 may also be configured to communicate with a remote stationary server via wired network connections as well.

Further, the battery thermal management system 1 comprises a control unit 3 connected to the communication unit 2. The control unit 3 is configured to retrieve 101, 102, 103 vehicle diagnostic data (via the communication unit 2) from a plurality of electric vehicles 11, 12, 13. The control unit 3 may be realized as a software controlled processor. However, the controller may alternatively be realized wholly or partly in hardware. For example, the control unit 3 may be realized as a plurality of computer processing units that together form the control unit 13, i.e. a plurality of computers may be interconnected in order to form the control unit and its functionality as disclosed herein.

The vehicle diagnostic data comprises at least a temperature of each traction battery pack 22 of each electric vehicle 11, 12, 13. However, the vehicle diagnostic data may additionally comprise information about cargo weight, cargo distribution of the electric vehicles 11, 12, 13, state of charge of each traction battery pack 22 and/or a state of health of each traction battery pack 22.

Moreover, the control unit 3 is further configured to retrieve a planned route for a first electric vehicle 11. The planned route may either be retrieved 101 from the vehicle data, or from a central route planning entity 5 associated with the first electric vehicle 11. The control unit 3 is further configured to retrieve environmental data associated with the first electric vehicle 11. In more detail, the environmental data 6 includes weather forecast 6 and topographic data (e.g. slopes, sharp turns, etc.) for the planned route. The weather forecast includes temperature and may further include at least one of solar irradiance, and humidity. Each of these parameters may be considered to have a noteworthy effect on the battery temperature.

For example, in reference to the topographic data, if the route includes a relatively large number of inclinations, the required power output from the motor will be relatively high which results in an increased traction battery temperature due to the increased current output as compared to a relatively neutral (little to no slopes) route. In some embodiments, the control unit 3 may be further configured to retrieve traffic data (e.g. traffic load, accidents, congestions/traffic jams, other road blockages, etc.) associated with the planned route. The traffic data may for example be supplied by the central route planning entity 5.

Moving on, the control unit 3 is configured to determine a thermal management scheme for the first electric vehicle based on the retrieved vehicle diagnostic data and the retrieved environmental data. Specifically, the control unit 3 may be configured to determine the thermal management scheme for the first electric vehicle 11 based on the vehicle diagnostic data and on an expected thermal load on the traction battery pack 22 of the first electric vehicle 11 throughout the planned route, which expected thermal load in turn is based on the environmental data, preferably such that the traction battery pack 22 of the first electric vehicle 11 is kept within an optimum temperature range. The thermal management scheme comprises computer executable instructions for controlling heating and/or cooling of the traction battery pack 22 of the first electric vehicle 11. The determined thermal management scheme is then transmitted to the first electric vehicle 11 by the control unit 3 via the communication unit 2.

In an example, the planned route may comprise a large number of hills or inclinations during its initial 30%, which would lead to an increased battery temperature, above an optimal temperature for maximizing current output and range. Assuming that the temperature would pass the predefined threshold temperature after completing approximately 10% of the route, it would be advisable to cool the traction battery pack ahead of the 10% mark. However, from the weather forecast it turns out that the outside temperature will drop shortly, and it is likely that the outside temperature will be sufficient to keep the battery within an optimum temperature range until the 25% mark. Thus, the inventive system allows for such considerations and the resulting thermal management scheme is capable of accounting for such factors, thereby avoiding unnecessary cooling of the traction battery pack which otherwise could have pushed the battery temperature below a lower threshold resulting in impaired output and range.

In an embodiment, the control unit 3 is configured to retrieve one or more stops at charging stations for the first electric vehicle 11 along the planned route. Further, the control unit 3 is configured to determine a thermal management scheme comprising computer executable instructions for controlling heating and/or cooling of a traction battery pack 22 of the first electric vehicle 11 such that the temperature of the traction battery pack 22 is within a predefined temperature range when the electric vehicle reaches a charging station. Advantageously, battery performance can be increased by charging the battery within a defined temperature range.

Moreover, by arranging the thermal management system 1 as a centralized system controlling a thermal management scheme for a plurality of vehicles, the data processing power can be increased as well as the data communication efficiency. In more detail, by avoiding local processors (within each vehicle) to retrieve large data sets (e.g. forecasts) and processes these, relatively large cost reductions can be readily achieved due to the increased data management efficiency. For example, a central unit can retrieve a forecast for a relatively large area covering a large number of planned routes for a large number of electric vehicles. Also, historical data can be stored and used for processing efficiency in a less complicated manner (e.g. vehicle B has performed route X a plurality of times, so when vehicle A is to perform route X for the first time, historical data for vehicle B may be utilized).

In more detail, the thermal management system 1 further has a data storage unit 7 which contains historical data comprising information about historical thermal management schemes. The data storage unit 7 may be a local unit associated with the control unit 3 or a remote data repository accessible via the communication unit 2. The historical thermal management schemes are thermal management schemes along different routes for a large number of vehicles. By storing thermal management schemes, and subsequently using this historical data for generating future thermal management schemes, the heating/cooling predictions can be more accurate (due to verified data) wherefore the thermal management schemes can be better optimized. The historical data is used to form a self-learning algorithm in an Artificial Intelligence (Al) application.

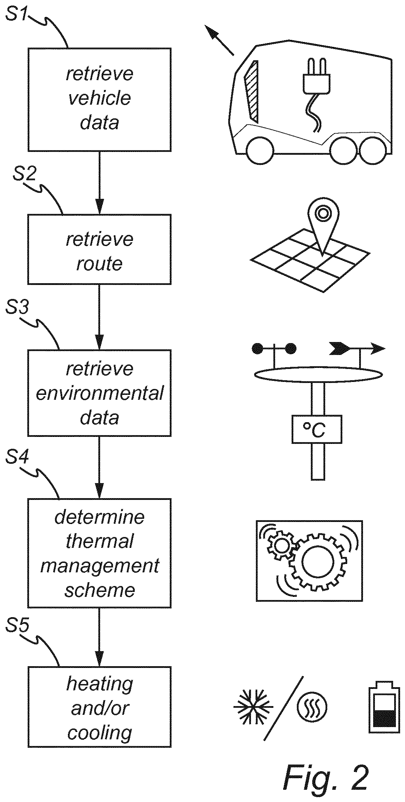

Fig. 2 shows a flow chart representation of a method for thermal management of a traction battery pack of an electric vehicle. The method includes a step of retrieving S1 vehicle diagnostic data from a plurality of electric vehicle. The vehicle diagnostic data comprises at least a temperature of the traction battery packs of each electric vehicle, but may however further comprise information about cargo weight, cargo distribution of the electric vehicles, state of charge of each traction battery pack, and/or a state of health of each traction battery pack.

Further, the method includes retrieving S2 a planned route for a first electric vehicle, and retrieving S3 environmental data associated with a geographical location of the planned route. The environmental data includes a weather forecast and topographic data of the planned route. The weather forecast includes expected temperature, and may include at least one of expected solar irradiance, and expected humidity. The method further includes determining S4 a thermal management scheme for the first electric vehicle based on the vehicle diagnostic data and the environmental data. The thermal management scheme is further determined S4 based on historical data comprising information about historical thermal management schemes, as discussed in the foregoing. Similarly, the thermal management scheme may be based on one or more planned stops along the planned route for charging the traction battery pack at charging stations, such that the temperature of the traction battery pack is within a predefined range when the first electric vehicle is estimated to recharge according to the planned route.

Further, the method includes heating and/or cooling S5 the traction battery pack of the first electric vehicle by means of a suitable heating or cooling arrangement provided within the electric vehicle, based on the determined thermal management scheme.

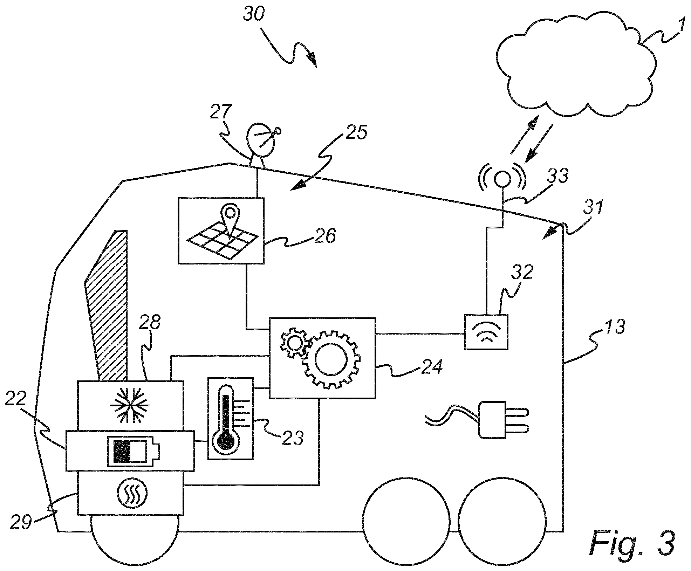

Fig. 3 is a schematic illustration of a vehicle control system 30 for monitoring and controlling a temperature of a traction battery pack of an electric vehicle 13, in accordance with an embodiment of the present invention. The vehicle control system 30 comprises communication circuitry 31 for transmitting and receiving data packets to and from a battery thermal management system 1, such as the one illustrated in Fig. 1. The communication circuitry 1 is here illustrated in the form of a data route 32 connected on an antenna 33. However, other realizations are feasible and readily understood by the skilled reader.

The vehicle control system 30 further comprises a temperature sensor 23 for determining a temperature of the traction battery pack 22, and a temperature control arrangement 28, 29 for controlling a temperature of the traction battery pack. The vehicle control system 30 further has a controller 24 connected to the communication circuitry 31, the temperature sensor 23, the heating arrangement 29, and the cooling arrangement 28. Temperature control can be achieved by a heat transfer medium that might be in a gaseous, liquid, supercritical state or undergo a phase transition. Heat is added or removed either passively through thermal contact with the environment or actively by a heating device, a refrigeration system, or a combination of both. For temperature monitoring purposes, a battery pack may be equipped with an arbitrarily complex set of sensors for the measurement of various physical or even chemical properties. The signals delivered by these sensors are processed by an on board computer (control unit 24).

The controller 24 is configured to retrieve a planned route for the electric vehicle 13 from a geolocation system 25 of the electric vehicle 13 or from a remote route planning entity (e.g. accessible via a centralized fleet management system). The internal geolocation system 25 may for example be a Global Navigation Satellite System (GNSS) such as GPS, GLONASS, Galileo, etc. having a local processing unit 26 and one or more antennas 27.

Further, the controller 24 is configured to retrieve a thermal management scheme associated with the retrieved planned route from the remote battery thermal management system 1. The thermal management scheme comprises computer executable instructions for controlling heating and/or cooling of the traction battery pack. Once the thermal management scheme is executed by the controller 24, it is configured to control the heating arrangement and the cooling arrangement based on the retrieved thermal management scheme.

The skilled person in the art realizes that the present invention by no means is limited to the embodiments described above. The features of the described embodiments may be combined in different ways, and many modifications and variations are possible within the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A predictive battery thermal management system (1) for an electric vehicle (11) comprising a traction battery pack (22), said system comprising:
a communication unit (2) for transmitting and receiving data packets;
a control unit (3) connected to said communication unit, said control unit being configured to:
retrieve vehicle diagnostic data via the communication unit (2) from a plurality of electric vehicles (11, 12, 13), said vehicle diagnostic data comprising a temperature of each traction battery pack of each electric vehicle;
retrieve a planned route for a first electric vehicle (11), and environmental data associated with a geographical location of the planned route, said environmental data including weather forecast (6) and topographic data for said planned route, wherein said weather forecast includes expected temperature;
determine a thermal management scheme for said first electric vehicle based on said vehicle diagnostic data from a plurality of electric vehicles (11, 12, 13) and the expected temperature of said environmental data, said thermal management scheme comprising computer executable instructions for controlling heating and/or cooling of a traction battery pack of said first electric vehicle;
transmit said thermal management scheme to said first electric vehicle, via the communication unit (2),
wherein said control unit is configured to determine the thermal management scheme for said first electric vehicle based on said vehicle diagnostic data and on an expected thermal load on the traction battery pack of the first electric vehicle throughout the planned route, which expected thermal load is based on said environmental data, such that the traction battery pack of the first electric vehicle is kept within an optimum temperature range,
wherein the battery thermal management system further comprises a data storage unit comprising historical data, wherein said thermal management scheme for said first electric vehicle is further based on said historical data, said historical data comprising historical thermal management schemes along different routes for a number of vehicles and corresponding results including resulting temperature range and overall health of the battery pack,
wherein the historical data is used to form a self-learning algorithm in an artificial intelligence application, whereby the battery thermal management system is thereby self-improving.

2. The battery thermal management system according to claim 1, wherein said vehicle diagnostics data further comprises information about cargo weight and cargo distribution of said electric vehicles.

3. The battery thermal management system according to claim 1 or 2, wherein said weather forecast includes at least one of solar irradiance, and humidity.

4. The battery thermal management system according to any one of claims 1 - 3, wherein said control unit is further configured to retrieve traffic data associated with said planned route, and wherein said thermal management scheme is further based on said traffic data.

5. The battery thermal management system according to any one of the preceding claims, wherein said vehicle diagnostic data comprises at least one of a state of charge of each traction battery pack, a state of health of each traction battery pack.

6. The battery thermal management system according to any one of the preceding claims, wherein said control unit is further configured to:
retrieve a predefined stop at a charging station along said planned route for said first electric vehicle;
determine said thermal management scheme further comprises computer executable instructions for controlling heating and/or cooling of the traction battery pack of said first electric vehicle such that said traction battery pack is within a predefined temperature range when said first electric vehicle reaches said predefined stop.

7. The battery thermal management system according to any one of the preceding claims, wherein the electric vehicle is an electric autonomous or semi-autonomous vehicle.

8. The battery thermal management system according to any one of the preceding claims, wherein said weather forecast further includes at least one of expected solar irradiance and expected humidity.

9. A method for predictive thermal management of a traction battery pack (22) of an electric vehicle (11) said method comprising:
retrieving by a control unit (3), connected to a communication unit (2) for transmitting and receiving data packets, vehicle diagnostic data from a plurality of electric vehicles (11, 12, 13), via the communication unit (2), said vehicle diagnostic data comprising a temperature of each traction battery pack of each electric vehicle;
retrieving a planned route for a first electric vehicle, and environmental data associated with a geographical location of the planned route, said environmental data including weather forecast and topographic data for said planned route, wherein said weather forecast includes expected temperature;
determining a thermal management scheme for said first electric vehicle based on said vehicle diagnostic data and the expected temperature of said environmental data, wherein the thermal management scheme for said first electric vehicle is determined based on said vehicle diagnostic data and on an expected thermal load on the traction battery pack of the first electric vehicle throughout the planned route, which expected thermal load is based on said environmental data, such that the traction battery pack of the first electric vehicle is kept within an optimum temperature range, wherein said thermal management scheme for said first electric vehicle is further based on historical data, said historical data comprising historical thermal management schemes along different routes for a number of vehicles and corresponding results including resulting range and overall health of the battery pack, wherein the historical data is used to form a self-learning algorithm in an artificial intelligence application;
transmitting said thermal management scheme to said first electric vehicle (11) via the communication unit (2) heating and/or cooling the traction battery pack of said first electric vehicle based on said determined thermal management scheme.

10. An on-board vehicle control system (30) for monitoring and controlling a temperature of a traction battery pack (22) of an electric vehicle (13), said vehicle control system comprising:
communication circuitry (31) for transmitting and receiving data packets to and from a predictive battery thermal management system according to any one of claims 1 - 5 or according to any one of claims 7 - 8; a temperature sensor (23) for determining the temperature of the traction battery pack;
a temperature control arrangement comprising a heating arrangement (29) and a cooling arrangement (28), for controlling a temperature of said traction battery pack;
a controller (24) connected to said communication circuitry, said temperature sensor, said heating arrangement and to said cooling arrangement, said controller being configured to:
retrieve a planned route for said electric vehicle from a geolocation system (25) of the vehicle or from a remote route planning entity retrieve via the communication circuitry (31) a thermal management scheme associated with said planned route from said predictive battery thermal management system, said thermal management scheme comprising computer executable instructions for controlling heating and/or cooling said traction battery pack;
control said heating arrangement and said cooling arrangement based on said retrieved thermal management scheme such that the traction battery pack of the electric vehicle is kept within an optimum temperature range.

## Patentansprüche

1. Prädiktives Batteriewärmemanagementsystem (1) für ein Elektrofahrzeug (11), umfassend ein Traktionsbatteriepack (22), wobei das System Folgendes umfasst:
eine Kommunikationseinheit (2) zum Senden und Empfangen von Datenpaketen;
eine Steuereinheit (3), die mit der Kommunikationseinheit verbunden ist, wobei die Steuereinheit konfiguriert ist zum:
Abrufen von Fahrzeugdiagnosedaten über die Kommunikationseinheit (2) von einer Vielzahl von Elektrofahrzeugen (11, 12, 13), wobei die Fahrzeugdiagnosedaten eine Temperatur jedes Traktionsbatteriepacks jedes Elektrofahrzeugs umfassen;
Abrufen einer geplanten Route für ein erstes Elektrofahrzeug (11) und von Umgebungsdaten, die einem geographischen Ort der geplanten Route zugeordnet sind, wobei die Umgebungsdaten eine Wettervorhersage (6) und topographische Daten für die geplante Route beinhalten, wobei die Wettervorhersage die erwartete Temperatur beinhaltet;
Bestimmen eines Wärmemanagementschemas für das erste Elektrofahrzeug anhand der Fahrzeugdiagnosedaten von einer Vielzahl von Elektrofahrzeugen (11, 12, 13) und der erwarteten Temperatur der Umgebungsdaten, wobei das Wärmemanagementschema computerausführbare Anweisungen zum Steuern der Heizung und/oder Kühlung eines Traktionsbatteriepacks des ersten Elektrofahrzeugs umfasst;
Senden des Wärmemanagementschemas an das erste Elektrofahrzeug über die Kommunikationseinheit (2),
wobei die Steuereinheit so konfiguriert ist, dass sie das Wärmemanagementschema für das erste Elektrofahrzeug anahnd der Fahrzeugdiagnosedaten und einer erwarteten thermischen Belastung des Traktionsbatteriepacks des ersten Elektrofahrzeugs während der geplanten Route bestimmt, wobei die erwartete thermische Belastung auf den Umgebungsdaten basiert, so dass das Traktionsbatteriepack des ersten Elektrofahrzeugs innerhalb eines optimalen Temperaturbereichs gehalten wird,
wobei das Batteriewärmemanagementsystem ferner eine Datenspeichereinheit umfasst, die historische Daten umfasst, wobei das Wärmemanagementschema für das erste Elektrofahrzeug ferner auf den historischen Daten basiert, wobei die historischen Daten historische Wärmemanagementschemata entlang verschiedener Routen für eine Anzahl von Fahrzeugen und entsprechende Ergebnisse einschließlich des resultierenden Temperaturbereichs und des Gesamtzustands des Batteriepacks beinhalten,
wobei die historischen Daten verwendet werden, um einen selbstlernenden Algorithmus in einer Anwendung der künstlichen Intelligenz auszubilden, wodurch das Batteriewärmemanagementsystem selbstverbessernd ist.

2. Batteriewärmemanagementsystem nach Anspruch 1, wobei die Fahrzeugdiagnosedaten ferner Informationen über das Gewicht der Ladung und die Ladungsverteilung der Elektrofahrzeuge umfassen.

3. Batteriewärmemanagementsystem nach Anspruch 1 oder 2, wobei die Wettervorhersage mindestens eines der Elemente Sonneneinstrahlung und Feuchtigkeit umfasst.

4. Batteriewärmemanagementsystem nach einem der Ansprüche 1 bis 3, wobei die Steuereinheit ferner so konfiguriert ist, dass sie Verkehrsdaten abruft, die der geplanten Route zugeordnet sind, und wobei das Wärmemanagementschema ferner auf den Verkehrsdaten basiert.

5. Batteriewärmemanagementsystem nach einem der vorhergehenden Ansprüche, wobei die Fahrzeugdiagnosedaten mindestens einen Ladezustand jedes Traktionsbatteriepacks und einen Gesundheitszustand jedes Traktionsbatteriepacks umfassen.

6. Batteriewärmemanagementsystem nach einem der vorhergehenden Ansprüche, wobei die Steuereinheit ferner konfiguriert ist zum:
Abrufen eines vordefinierten Stopps an einer Ladestation entlang der geplanten Route für das erste Elektrofahrzeug;
Bestimmen, dass das Wärmemanagementschema ferner computerausführbare Anweisungen zum Steuern des Heizens und/oder Kühlens des Traktionsbatteriepacks des ersten Elektrofahrzeugs umfasst, so dass das Traktionsbatteriepack innerhalb eines vordefinierten Temperaturbereichs liegt, wenn das erste Elektrofahrzeug den vordefinierten Stopp erreicht.

7. Batteriewärmemanagementsystem nach einem der vorhergehenden Ansprüche, wobei das Elektrofahrzeug ein autonomes oder teilautonomes Elektrofahrzeug ist.

8. Batteriewärmemanagementsystem nach einem der vorhergehenden Ansprüche, wobei die Wettervorhersage ferner mindestens eine der folgenden Angaben beinhaltet: erwartete Sonneneinstrahlung und erwartete Luftfeuchtigkeit.

9. Verfahren für ein prädiktives Wärmemanagement eines Traktionsbatteriepacks (22) eines Elektrofahrzeugs (11), wobei das Verfahren umfasst:
Abrufen von Fahrzeugdiagnosedaten von einer Vielzahl von Elektrofahrzeugen (11, 12, 13) über die Kommunikationseinheit (2) durch eine Steuereinheit (3), die mit einer Kommunikationseinheit (2) zum Senden und Empfangen von Datenpaketen verbunden ist, wobei die Fahrzeugdiagnosedaten eine Temperatur jedes Traktionsbatteriepacks jedes Elektrofahrzeugs umfassen;
Abrufen einer geplanten Route für ein erstes Elektrofahrzeug und von Umgebungsdaten, die einem geographischen Ort der geplanten Route zugeordnet sind, wobei die Umgebungsdaten eine Wettervorhersage und topographische Daten für die geplante Route beinhalten, wobei die Wettervorhersage die erwartete Temperatur beinhaltet;
Bestimmen eines Wärmemanagementschemas für das erste Elektrofahrzeug anhand der Fahrzeugdiagnosedaten und der erwarteten Temperatur der Umgebungsdaten, wobei das Wärmemanagementschema für das erste Elektrofahrzeug anhand der Fahrzeugdiagnosedaten und einer erwarteten thermischen Belastung des Traktionsbatteriepacks des ersten Elektrofahrzeugs während der geplanten Route bestimmt wird, wobei die erwartete thermische Belastung auf den Umgebungsdaten basiert, so dass das Traktionsbatteriepack des ersten Elektrofahrzeugs innerhalb eines optimalen Temperaturbereichs gehalten wird, wobei das Wärmemanagementschema für das erste Elektrofahrzeug ferner auf historischen Daten basiert, wobei die historischen Daten historische Wärmemanagementschemata entlang verschiedener Routen für eine Anzahl von Fahrzeugen und entsprechende Ergebnisse einschließlich der resultierenden Reichweite und des Gesamtzustands des Batteriepacks umfassen, wobei die historischen Daten verwendet werden, um einen selbstlernenden Algorithmus in einer Anwendung künstlicher Intelligenz auszubilden;
Senden des Wärmemanagementschemas an das erste Elektrofahrzeug (11) über die Kommunikationseinheit (2),
Heizen und/oder Kühlen des Traktionsbatteriepacks des ersten Elektrofahrzeugs anhand des bestimmten Wärmemanagementschemas.

10. Fahrzeugbordsteuersystem (30) zum Überwachen und Steuern einer Temperatur eines Traktionsbatteriepacks (22) eines Elektrofahrzeugs (13), wobei das Fahrzeugsteuersystem umfasst:
Kommunikationsschaltung (31) zum Senden und Empfangen von Datenpaketen zu und von einem prädiktiven Batteriewärmemanagementsystem nach einem der Ansprüche 1-5 oder nach einem der Ansprüche 7-8;
einen Temperatursensor (23) zum Bestimmen der Temperatur des Traktionsbatteriepacks;
eine Temperatursteueranordnung, umfassend eine Heizanordnung (29) und eine Kühlanordnung (28), um eine Temperatur des Traktionsbatteriepacks zu steuern;
eine Steuerung (24), die mit der Kommunikationsschaltung, dem Temperatursensor, der Heizanordnung und der Kühlanordnung verbunden ist, wobei die Steuerung konfiguriert ist zum:
Abrufen einer geplanten Route für das Elektrofahrzeug von einem Geolokalisierungssystem (25) des Fahrzeugs oder von einer entfernten Routenplanungseinheit,
Abrufen, über die Kommunikationsschaltung (31), eines Wärmemanagementschemas, das der geplanten Route zugeordnet ist, von dem prädiktiven Batteriewärmemanagementsystem, wobei das Wärmemanagementschema computerausführbare Anweisungen zum Steuern der Heizung und/oder Kühlung des Traktionsbatteriepacks umfasst;
Steuern der Heizanordnung und der Kühlanordnung anhand des abgerufenen Wärmemanagementschemas, so dass das Traktionsbatteriepack des Elektrofahrzeugs in einem optimalen Temperaturbereich gehalten wird.

## Revendications

1. Système de gestion thermique prédictive de batterie (1) pour un véhicule électrique (11) comprenant un bloc-batterie de traction (22), ledit système comprenant :
une unité de communication (2) pour transmettre et recevoir des paquets de données ;
une unité de commande (3) reliée à ladite unité de communication, ladite unité de commande étant configurée pour :
récupérer des données de diagnostic de véhicule via l'unité de communication (2) depuis une pluralité de véhicules électriques (11, 12, 13), lesdites données de diagnostic de véhicule comprenant une température de chaque bloc-batterie de traction de chaque véhicule électrique ;
récupérer un itinéraire planifié pour un premier véhicule électrique (11) et des données environnementales associées à un emplacement géographique de l'itinéraire planifié, lesdites données environnementales incluant des prévisions météorologiques (6) et des données topographiques pour ledit itinéraire planifié, dans lequel lesdites prévisions météorologiques incluent une température attendue ;
déterminer un schéma de gestion thermique pour ledit véhicule électrique sur la base desdites données de diagnostic de véhicule depuis une pluralité de véhicules électriques (11, 12, 13) et de la température attendue desdites données environnementales, ledit schéma de gestion thermique comprenant des instructions exécutables par ordinateur pour commander le chauffage et/ou le refroidissement d'un bloc-batterie de traction dudit premier véhicule électrique ;
transmettre ledit schéma de gestion thermique audit premier véhicule, via l'unité de communication (2),
dans lequel ladite unité de commande est configurée pour déterminer le schéma de gestion thermique pour ledit premier véhicule électrique sur la base desdites données de diagnostic de véhicule et d'une charge thermique attendue sur le bloc-batterie de traction du premier véhicule électrique sur l'itinéraire planifié, la charge thermique attendue étant basée sur lesdites données environnementales de sorte que le bloc-batterie de traction du premier véhicule électrique soit maintenu à l'intérieur d'une plage de température optimale,
dans lequel le système de gestion thermique de batterie comprend en outre une unité de stockage de données comprenant des données historiques, dans lequel ledit schéma de gestion thermique pour ledit premier véhicule électrique est en outre basé sur lesdites données historiques, lesdites données historiques comprenant des schémas de gestion thermique historiques sur différents itinéraires pour un certain nombre de véhicules et des résultats correspondants incluant une plage de température résultante et un état de santé global du bloc-batterie,
dans lequel les données historiques sont utilisées pour constituer un algorithme d'autoapprentissage dans une application d'intelligence artificielle, de telle manière que le système de gestion thermique de batterie s'améliore de ce fait en continu.

2. Système de gestion thermique de batterie selon la revendication 1, dans lequel lesdites données de diagnostic de véhicule comprennent en outre des informations relatives à un poids de cargaison et à une répartition de cargaison desdits véhicules électriques.

3. Système de gestion thermique de batterie selon la revendication 1 ou 2, dans lequel lesdites prévisions météorologiques incluent au moins l'un parmi un rayonnement solaire et une humidité.

4. Système de gestion thermique de batterie selon l'une quelconque des revendications 1 à 3, dans lequel ladite unité de commande est en outre configurée pour récupérer des données de circulation associées audit itinéraire planifié, et dans lequel ledit schéma de gestion thermique est en outre basé sur lesdites données de circulation.

5. Système de gestion thermique de batterie selon l'une quelconque des revendications précédentes, dans lequel lesdites données de diagnostic de véhicules comprennent au moins l'un parmi un état de charge de chaque bloc-batterie de traction et un état de santé de chaque bloc-batterie de traction.

6. Système de gestion thermique de batterie selon l'une quelconque des revendications précédentes, dans lequel ladite unité de commande est en outre configurée pour :
récupérer un arrêt prédéfini à une station de charge le long dudit itinéraire planifié pour ledit premier véhicule électrique ;
déterminer ledit schéma de gestion thermique, comprenant en outre des instructions exécutables par ordinateur pour commander le chauffage et/ou le refroidissement du bloc-batterie de traction dudit premier véhicule électrique de sorte que ledit bloc-batterie de traction soit à l'intérieur d'une plage de température prédéfinie lorsque ledit premier véhicule atteint ledit arrêt prédéfini.

7. Système de gestion thermique de batterie selon l'une quelconque des revendications précédentes, dans lequel le véhicule électrique est un véhicule électrique autonome ou semi-autonome.

8. Système de gestion thermique de batterie selon l'une quelconque des revendications précédentes, dans lequel lesdites prévisions météorologiques incluent en outre au moins l'un parmi un rayonnement solaire attendu et une humidité attendue.

9. Procédé de gestion thermique prédictive d'un bloc-batterie de traction (22) d'un véhicule électrique (11), ledit procédé comprenant :
la récupération, par une unité de commande (3) reliée à une unité de communication (2) pour transmettre et recevoir des paquets de données, de données de diagnostic de véhicule depuis une pluralité de véhicules électriques (11, 12, 13) via l'unité de communication (2), lesdites données de diagnostic de véhicule comprenant une température de chaque bloc-batterie de traction de chaque véhicule électrique ;
la récupération d'un itinéraire planifié pour un premier véhicule électrique et de données environnementales associées à un emplacement géographique de l'itinéraire planifié, lesdites données environnementales incluant des prévisions météorologiques et des données topographiques pour ledit itinéraire planifié, dans lequel lesdites prévisions météorologiques incluent une température attendue ;
la détermination d'un schéma de gestion thermique pour ledit premier véhicule électrique sur la base desdites données de diagnostic de véhicule et de la température attendue desdites données environnementales, dans lequel le schéma de gestion thermique pour ledit premier véhicule électrique est déterminé sur la base desdites données de diagnostic de véhicule et d'une charge thermique attendue sur le bloc-batterie de traction du premier véhicule électrique sur l'itinéraire planifié, la charge thermique attendue étant basée sur lesdites données environnementales de sorte que le bloc-batterie de traction du premier véhicule électrique soit maintenu à l'intérieur d'une plage de température optimale, dans lequel le système de gestion thermique de batterie pour ledit premier véhicule électrique est en outre basé sur des données historiques, lesdites données historiques comprenant des schémas de gestion thermique historiques sur différents itinéraires pour un certain nombre de véhicules et des résultats correspondants incluant une plage résultante et un état de santé global du bloc-batterie, dans lequel les données historiques sont utilisées pour constituer un algorithme d'autoapprentissage dans une application d'intelligence artificielle ;
la transmission dudit schéma de gestion thermique audit premier véhicule électrique (11) via l'unité de communication (2) ;
le chauffage et/ou le refroidissement du bloc-batterie de traction dudit premier véhicule électrique sur la base dudit schéma de gestion thermique déterminé.

10. Système embarqué de commande de véhicule (30) pour la surveillance et la commande d'une température d'un bloc-batterie de traction (22) d'un véhicule électrique (13), ledit système de commande de véhicule comprenant :
une circuiterie de communication (31) pour transmettre et recevoir des paquets de données à et depuis un système de gestion thermique prédictive de batterie selon l'une quelconque des revendications 1 à 5 ou selon l'une quelconque des revendications 7 et 8 ;
un capteur de température (23) pour déterminer la température du bloc-batterie de traction ;
un agencement de commande de température comprenant un agencement de chauffage (29) et un agencement de refroidissement (28), pour commander une température dudit bloc-batterie de traction ;
un dispositif de commande (24) relié à ladite circuiterie de communication, audit capteur de température, audit agencement de chauffage et audit agencement de refroidissement, ledit dispositif de commande étant configuré pour :
récupérer un itinéraire planifié pour ledit véhicule électrique depuis un système de géolocalisation (25) du véhicule ou depuis une entité de planification d'itinéraire à distance ;
récupérer, via la circuiterie de communication (31), un schéma de gestion thermique associé audit itinéraire planifié depuis ledit système de gestion thermique prédictive de batterie, ledit schéma de gestion thermique comprenant des instructions exécutables par ordinateur pour commander le chauffage et/ou le refroidissement dudit bloc-batterie de traction ;
commander ledit agencement de chauffage et ledit agencement de refroidissement sur la base dudit schéma de gestion thermique récupéré de sorte que le bloc-batterie de traction du véhicule électrique soit maintenu à l'intérieur d'une plage de température optimale.
